# EUROPÄISCHE PATENTANMELDUNG

(11) **EP 0 776 096 A2**
(43) Veröffentlichungstag der Anmeldung: **28.05.1997**
(21) Anmeldenummer: 96116292.2
(22) Anmeldetag: 11.10.1996
(51) Int. Cl.: H04B 1/16, H04B 1/10

(54) **Schaltanordnung für mobile Rundfunkempfänger**

(30) Priorität: 16.11.1995 DE 19542738
(71) Anmelder: Bayerische Motoren Werke Aktiengesellschaft, 80788 München (DE)
(72) Erfinder: Schneider, Steffen, 80935 München (DE)

(57) **Zusammenfassung**

Bei einer Schaltanordnung für mobile Rundfunkempfänger mit einer Einrichtung zum Einstellen des Stereo-Wiedergabeanteils relativ zum Mono-Wiedergabeanteil in Abhängigkeit von Änderungen der Empfangs-Feldstärke, ist die Stellzeit für den Übergang von Stereo- auf Monowiedergabe und umgekehrt abhängig von der Wiedergabe-Lautstärke und/oder Dynamik des Rundfunksignals.

## Beschreibung

Die Erfindung bezieht sich auf eine Schaltanordnung mit den Merkmalen des Oberbegriffs von Patentanspruch 1.

Es ist bei dieser Schaltanordnung bekannt, bei Absinken der Empfangs-Feldstärke ohne Reaktionszeit von Stereo- auf Mono-Wiedergabe und beim Ansteigen wieder zurück auf Stereo umzuschalten. Der Übergang erfolgt meist gleitend.

Mono- statt Stereo-Wiedergabe führt i.d.R. zu einer Beeinträchtigung des Wiedergabekomforts. Häufiges Umschalten zwischen Mono und Stereo führt zum ständigen Schwanken des Stereoeffekts, das die Wiedergabequalität deutlich beeinflußt. Andererseits ist es notwendig, bei Absinken der Feldstärke unmittelbar von Stereo auf Mono umzuschalten, um ein Aufrauschen des Signals zu vermeiden.

Der Erfindung liegt die Aufgabe zugrunde, eine Schaltanordnung der eingangs genannten Art zu schaffen, bei der der Einfluß von Feldstärke-Schwankungen auf die Wiedergabequalität gegenüber der bekannten Schaltanordnung deutlich reduziert ist.

Die Erfindung löst diese Aufgabe durch die kennzeichnenden Merkmale des Patentanspruchs 1.

Wesentlich ist die Lautstärke und/oder die Dynamik des NF-Signals. Unter Lautstärke ist die Höhe der Modulation, unter Dynamik das Verhältnis von lautester zu leisester Stelle des vom Sender abgestrahlten Signals zu verstehen. Lautstärke und Dynamik sind unabhängig von der Einstellung des Wiedergabe-Lautstärkestellers. Bei hoher Lautstärke und/oder geringer Dynamik des NF-Signals wird die Stellzeit (Stereo-Mono) und Rückstellzeit (Mono-Stereo) verlängert (z.B. auf 4 sec.). Die bei schnellen Feldstärkeeinbrüchen auftretenden Rauschanteile im Signal werden durch die hohe Lautstärke bzw. geringe Dynamik kaum oder gar nicht wahrgenommen.

Bei geringer Lautstärke und/oder hoher Dynamik gleitet das Gerät wie bisher schnell zwischen Stereo und Mono.

Bei geringer Lautstärke und/oder hoher Dynamik ist der Wechsel von Mono auf Stereo und zurück schnell, bei großer Lautstärke und/oder geringer Dynamik hingegen langsam, beispielsweise 4 sec lang. Es ist möglich, nur zwischen zwei Einstellzeiten in Abhängigkeit von Lautstärke und/oder Dynamik auszuwählen. Demgegenüber ist es für die Verbesserung der Wiedergabequalität von Vorteil, die Stellzeit in Abhängigkeit von der Lautstärke und/oder Dynamik variabel zu gestalten. Bei geringer Lautstärke und/oder großer Dynamik ist die Stellzeit minimal. Bei mittlerer Lautstärke und/oder mittlerer Dynamik ist die Stellzeit z.B. = 500 ms, bei hoher Lautstärke und/oder geringer Dynamik z.B. gleich 4 sec lang.

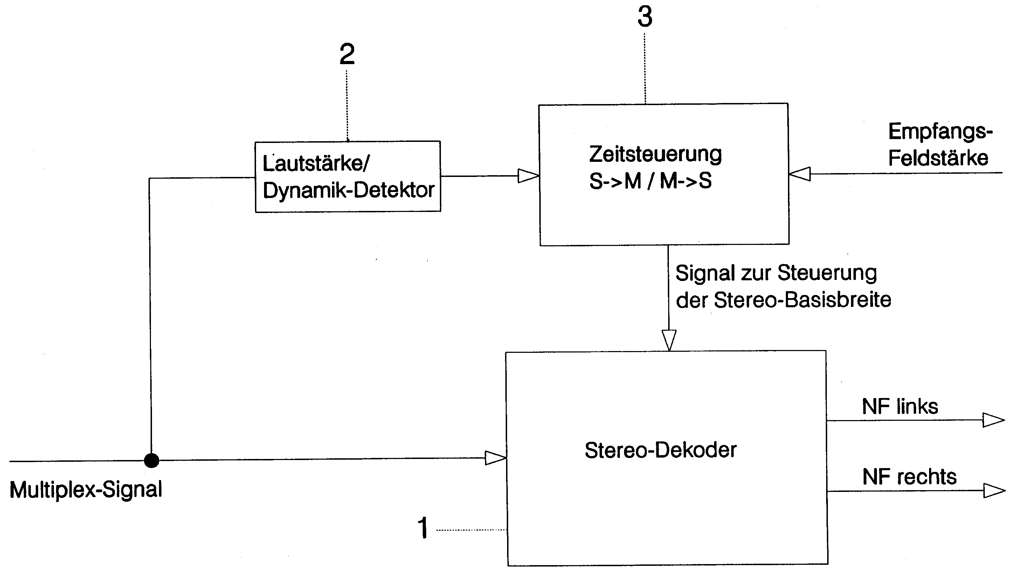

Anhand der Zeichnung ist die Erfindung weiter erläutert.

Die einzige Figur zeigt schematisch einen Teil eines mobilen Rundfunkempfängers zum Einsatz beispielsweise in einem Kraftfahrzeug. Das Multiplex-Empfangssignal gelangt in einen Stereodecoder 1 und wird dort als NF-Signal für den linken und rechten Wiedergabekanal ausgegeben. Das Empfangssignal ist ferner über einen Lautstärke- und/oder Dynamikdetektor 2 geführt.

Dem Detektor 2 ist eine Schaltung 3 nachgeordnet, die das ihr zur Verfügung stehende schnelle Empfangsfeldstärke-Signal in Abhängigkeit von der Steuergröße aus Schaltung 2 weiterverarbeitet. Das Signal zur Steuerung der Stereo-Basisbreite folgt der Empfangsfeldstärke nun mehr oder weniger schnell in Abhängigkeit vom Ausgangssignal der Schaltung 2.

Die Steuerung erfolgt in der Art, daß bei geringer Lautstärke und/oder großer Dynamik das Signal zur Steuerung der Stereokanaltrennung nahezu unverzögert dem Empfangsfeldstärke-Signal entspricht. Es wird sofort und vollständig von Stereo auf Mono und bei Ansteigen der Feldstärke wieder auf Stereo umgeschaltet. Bei hoher Lautstärke und/oder geringer Dynamik wird der Mittelwert über die Feldstärke gebildet. Starke Schwankungen werden gemittelt. Es erfolgt ein langsames Umschalten von Stereo auf Mono und wieder umgekehrt. Die Kanaltrennung folgt dem Mittelwert und erfolgt gegenüber dem o.g. Fall verlangsamt. Das Signal zur Steuerung der Stereo-Kanaltrennung stellt nahezu den Mittelwert des Empfangs-Feldstärke-Signal über z.B. 4 sec. dar. Ein dauerndes Umschalten zwischen Mono und Stereo wird dadurch vermieden.

## Patentansprüche

1. Schaltanordnung für mobile Rundfunkempfänger mit einer Einrichtung zum Einstellen des Stereo-Wiedergabeanteils relativ zum Mono-Wiedergabeanteil in Abhängigkeit von Änderungen der Empfangs-Feldstärke, dadurch gekennzeichnet, daß die Stellzeit für den Übergang von Stereo- auf Monowiedergabe und umgekehrt abhängig von der Wiedergabe-Lautstärke und/oder Dynamik des Rundfunksignals ist.

2. Schaltanordnung nach Anspruch 1, dadurch gekennzeichnet, daß die Stellzeit bei geringer Lautstärke und/oder hoher Dynamik minimal ist.

3. Schaltanordnung nach Anspruch 1 oder 2, dadurch gekennzeichnet, daß die Stellzeit bei großer Lautstärke und/oder kleiner Dynamik maximal ist.

4. Schaltanordnung nach Anspruch 2 oder 3, dadurch gekennzeichnet, daß die Rückstellzeit abhängig von der Lautstärke und/oder Dynamik variabel ist.
